# EUROPEAN PATENT SPECIFICATION

(11) **EP 2 001 203 B1**
(45) Date of publication and mention of the grant of the patent: **27.02.2013**
(21) Application number: 08157524.3
(22) Date of filing: 03.06.2008
(51) Int. Cl.: H04L 29/08, H04L 29/06

(54) **Method of transmitting/receiving broadcasting signals and receiver**
Verfahren zum Senden bzw. Empfangen von Rundfunksignalen und Empfänger
Procédé de transmission/réception de signaux de diffusion et récepteur

(30) Priority: 05.06.2007 KR 20070054910
(43) Date of publication of application: 10.12.2008
(73) Proprietor: LG Electronics Inc., Seoul 150-721 (KR)
(72) Inventor: Kim, Jin Pil, 137-724, Seoul (KR); Lee, Joon Hui, 137-724, Seoul (KR)
(74) Representative: Cabinet Plasseraud

(56) References cited:
- US-A1- 2006 053 450
- US-A1- 2007 100 984
- US-B1- 6 526 577

## Description

This application claims the priority benefit of Korean Application No. 10-2007-0054910, filed on June 05, 2007.

### BACKGROUND OF THE INVENTION

### Field of the Invention

The present invention relates to a method of transmitting/receiving a broadcasting signal and a receiver, and more particularly, to a method of transmitting/receiving a broadcasting signal, which is capable of receiving a plurality of video streams, and a receiver.

### Discussion of the Related Art

The existing television (TV) system transmits contents, which are manufactured by a broadcasting station, via a transmission medium such as terrestrial, cable or satellite broadcast, and a user views a broadcasting signal transmitted via the transmission medium using a TV receiver.

However, in addition to the existing analog broadcast, as digital TV technology has been developed and has come into wide use, a service including a variety of contents such as real-time broadcast, contents on demand (CoD), games or news can be provided to the user using a home Internet network as well as the existing transmission medium.

Examples of the provision of the service using the Internet network include an Internet protocol TV (IPTV) system. The IPTV system provides information services, moving picture contents and broadcast programs to the TV receiver using a very high speed Internet network.

The IPTV system which provides the service using the Internet network is similar to the cable or satellite broadcast in that a service including broadcasting contents such as a video signal is provided, but is characterized in that bi-directional communication is possible. The IPTV system allows the user to view a desired service at his/her convenient time, unlike the terrestrial, cable or satellite broadcast.

However, in the conventional broadcasting system or the IPTV system, only one video stream is transmitted with respect to one service. That is, the receiver for receiving the service cannot simultaneously receive a plurality of video streams. Accordingly, the conventional method is disadvantageous in that the plurality of video streams can be received only by a separate service.
The document US 2007/100984 A1 describes apparatuses and methods in a digital broadcast transmission system for identifying a desired ESG fragment in a list of ESG fragments.

### SUMMARY OF THE INVENTION

Accordingly, the present invention is directed to a method of transmitting/receiving a broadcasting signal and a receiver that substantially obviate one or more problems due to limitations and disadvantages of the related art.

An object of the present invention is to provide a method of transmitting/receiving digital contents, which is capable of simultaneously transmitting/receiving services including respective video streams, and a receiver.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of transmitting a digital content service according to claim 1 is disclosed.

In another aspect of the present invention, a method of receiving a digital content service according to claim 6 is disclosed.

In another aspect of the present invention, an apparatus for receiving a digital content service in accordance with an internet protocol according to claim 11 is disclosed.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a view showing an IPTV system;

FIGs. 2 and 3 are views showing a multicast method and a unicast method, respectively;

FIG. 4 is a view showing an example of receiving a service discovery record in order to receive broadcasting contents;

FIG. 5 is a view showing a method of transmitting/receiving a broadcasting signal according to an embodiment of the present invention;

FIG. 6 is a view showing the structure of a broadcast discovery record including information on multiple video streams according to an embodiment of the present invention;

FIG. 7 is a view showing the structure of a SupplementaryService element of multiple video streams according to an embodiment of the present invention;

FIG. 8 is a view showing an extensible Markup Language (XML) schema of the SupplementaryService element according to an embodiment of the present invention;

FIGs. 9A to 9C are views showing a broadcast discovery record including information on multiple video streams according to an embodiment of the present invention;

FIG. 10 is a view showing type information of the supplementary service according to an embodiment of the present invention;

FIGs. 11A to 11C are views showing a broadcast discovery record including supplementary service information of multiple video streams according to an embodiment of the present invention; and

FIG. 12 is a schematic block diagram showing the configuration of a receiver according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The IPTV system which transmits/receives contents using an Internet network includes a transmission server, a network and a receiver.

The IPTV transmission server includes a plurality of servers such as a service discovery server for transmitting service discovery and selection information, a streaming server, a broadband content guide (BCG) for transmitting content guide information, a customer information server, and a payment information server.

The streaming server transmits moving picture data encoded by a moving picture experts group (MPEG)-2 or MPEG-4 scheme to a user via a network in the streaming form. A protocol such as a real-time transport protocol (RTP) or a RTP control protocol (RTCP) may be used.

In a case of using a real-time streaming protocol (RTSP; RFC2326), a broadcasting receiver can control a moving picture stream received from the server via a function which is called "network trick play", such as Pause, Replay or Stop.

The BCG server can store BCG data including schedule information of the broadcasting contents and provide the stored BCG data to the broadcasting receiver. The BCG data includes stream connection information via the RTSP/RTP such that the broadcasting receiver can be connected to the streaming server.

Among the servers, the service discovery server can provide the service discovery information to the broadcasting receiver. Hereinafter, the service discovery information is referred to as a service discovery record. The service discovery information includes access information of the servers for providing the service including the contents, such as broadcast, video on demand (VOD), a game and a BCG, and service selection information. In more detail, the service discovery record may include a broadcast discovery record including the discovery information of the contents associated with a broadcasting network, CoD discovery information including the content discovery information associated with the VOD or the COD, and BCG discovery information including the discovery information associated with a broadcasting schedule.

The service discovery server separates the services provided via a plurality of different IP-based networks and provides the receiver with the service discovery information for allowing the broadcasting receiver to discover and select a service. The service discovery information may include a service list which can be provided via the network or positional information of the service in the network such that the receiver can discover the service in the network.

The broadcasting receiver can select a service using the service selection information in the service information (SI) record including information on the transmission of the service received from the service discovery server.

A network provider includes an Internet-based network and gateways. The gateways perform multicast group management using a protocol such as an Internet Group Management Protocol (IGMP) and quality of service (QoS) management, in addition to the transmission of general data.

The broadcasting receiver includes an IPTV settop, a homenet gateway, and an IPTV embedded TV on the basis of the IP. The broadcasting receiver can establish a home network end device (HNED) and provide the received service to the user.

A hybrid IPTV system can provide the user with conventional broadcasting contents, a variety of broadcasting contents such as broadcast, satellite broadcast or private broadcast, a variety of Internet image contents, or data contents other than the image contents. The contents can be provided to the broadcasting receiver in real time or on demand.

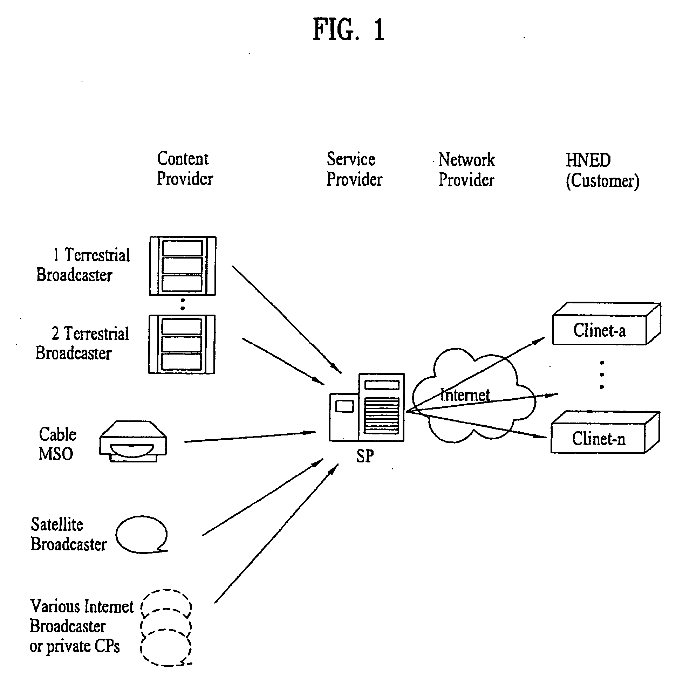

In the example of FIG. 1, the IPTV system is divided into a content provider, a service provider, a network provider and a broadcasting receiver. The content provider can generate and provide broadcasting contents. In the example of FIG. 1, the content provider includes a first terrestrial broadcaster, a second terrestrial broadcaster, a cable multiservice operator (MSO), a satellite broadcaster and a plurality of Internet broadcasters.

The service provider provides the contents provided by the content provider to the user as a service. The service provider can provide the service to the user according to an IP-based communication method such as a unicast or multicast method.

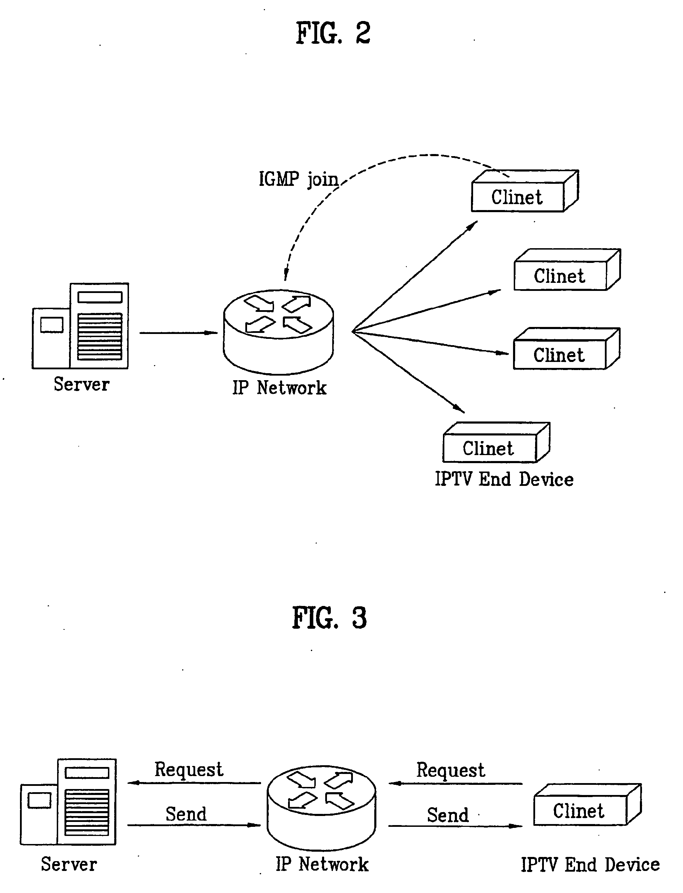

FIGs. 2 and 3 are views showing a multicast method and a unicast method, respectively.

The multicast method shown in FIG. 2 indicates a method of transmitting data to a plurality of clients in a specific group. The multicast method can simultaneously transmit the data to the plurality of clients which are registered in the server. In order to perform the multicast method, the server simultaneously transmits the data to the plurality of clients which are registered in the IGMP.

FIG. 3 shows the unicast method of transmitting/receiving data in a state in which the server and the client one-to-one correspond to each other. According to the unicast method, when the client requests the data to the server, the server transmits the data to the client.

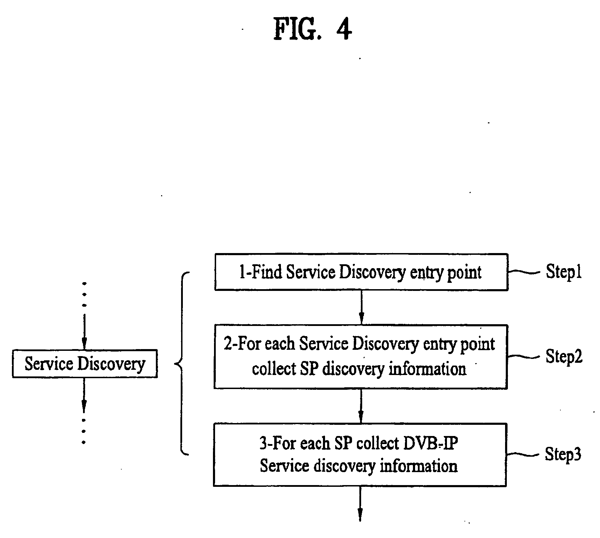

FIG. 4 is a view showing an example of receiving a service discovery record in order to receive broadcasting contents.

The service discovery record may include a low-level element such as a service location, a textual identifier and service information.

The receiver finds a service discovery entry point (step 1). Here, the entry point indicates information for entering into the service such that the receiver receives the service, that is, access information or an access server for accessing the service for service connection. For the service discovery entry point, service provider information for providing the service or contents is collected (step 2). The service discovery information is obtained from the service provider (step 3). As a protocol for transmitting/receiving information which can discover and select the service, a Service Discovery & Selection (SD&S) protocol may be used. In the SD&S protocol, for example, a model for providing information on service discovery and selection according to the communication concept shown in FIG. 1 is defined.

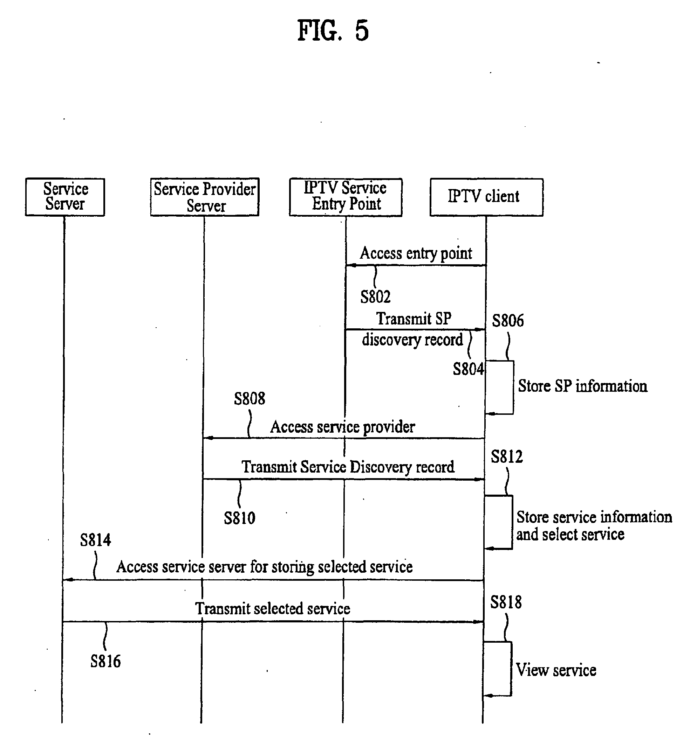

FIG. 5 is a view showing a method of transmitting/receiving a broadcasting signal according to an embodiment of the present invention. FIG. 5 shows the flow and the sequence of signals among the service server, the service provider server, the entry point of the IPTV system operator and the client.

When the client accesses the entry point of the IPTV system operator (S802), the IPTV system operator checks subscription information of the client. The IPTV system operator checks whether or not the client can receive a service associated with the IPTV system operator.

In a case where the client joins the service provided by the system operator, the IPTV system operator transmits a service provider (SP) discovery record to the client (S804).

The client stores the received SP discovery record information (S806). The service SP discovery record information may include an entry number and access information of the service provider.

The client accesses the service provider server using access information of the service provider (S808).

When the client accesses the service provider server, the service provider server transmits the service discovery record to the client (S810).

The service provider server generates first service discovery information describing a main service including a first digital content and second service discovery information describing a supplementary service including a second digital content, respectively. And the service provider server transmits the first service discovery information in accordance with an internet protocol, to the client.

The service discovery information may include a record including information on a plurality of video streams. For example, the service provider server can generate and transmit a broadcast discovery record of a main service and a broadcast discovery record of a supplementary service of the plurality of video streams. The broadcast discovery record of the main service includes service trigger information of the supplementary service. The supplementary service and the service trigger information thereof will be described in detail later.

The client stores the received service discovery record (S812). The service discovery record may include a channel number and access information of the service server. In a case where a user definition service is registered and used in the client, the entry number of the user definition service, the channel number and the access information may be stored in the client.

The client may provide the user with only a main service list using the stored information or provide a list of supplementary services or a list of alternate services associated with the main service together with the main service.

When the user inputs the number of the service to be received to the client, the client accesses the service server using the entry number and the channel number (S814).

The first service discovery information may include service trigger information with respect to the supplementary service, and the supplementary service is provided together with the main service if the second service discovery information is parsed using the service trigger information.

For example, if the main service is selected from services for providing a plurality of video streams, the service for providing the main service is accessed and, if the supplementary service is selected, the server for providing the supplementary service is accessed. The client may access any one of the server for providing the main service and the server for providing the supplementary service so as to receive the service or may access the server for providing the main server and the server for providing the selected supplementary service so as to receive the main service and the supplementary service together.

The service server transmits service data to the accessing client (S816).

The client receives the service data from the service server and outputs the service to the user (S818).

In the case where the plurality of video streams are provided by the main service and the supplementary service, only any one of the main service and the supplementary service may be selected and displayed on a screen. Alternatively, the stream of the supplementary service may be received and simultaneously displayed on a sub screen while the main service is displayed on a main screen. In the case where the main service and the supplementary service are simultaneously displayed on the screen, a picture in picture (PIP) or screen division may be used.

Provision of the services by a plurality of stream sources may be applied to audio streams and data streams as well as video streams. For example, even with respect to associated audio broadcasting streams or data broadcasting streams, a plurality of services can be simultaneously provided from a plurality of stream sources to the user.

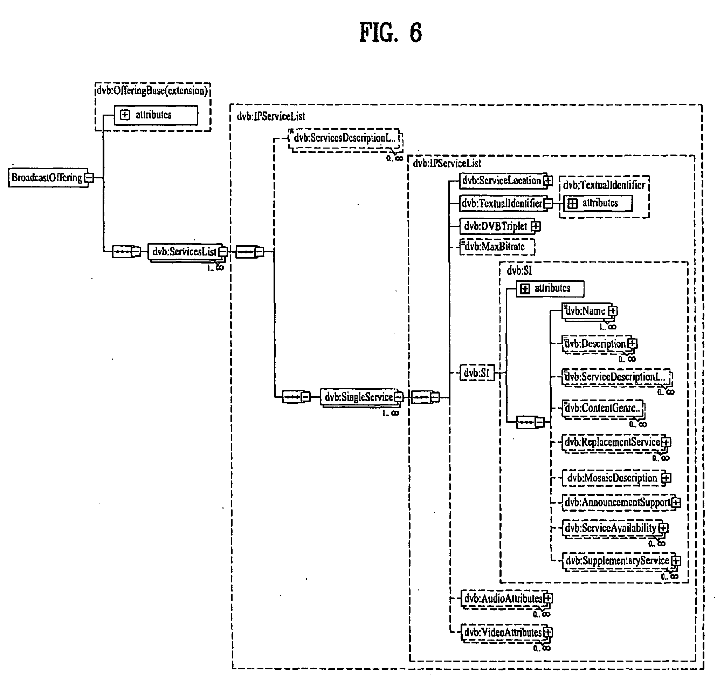

FIG. 6 is a view showing the structure of a broadcast discovery record including information on a plurality of video streams.

A broadcasting receiver finds and accesses a service discovery server for storing a service desired by a user in order to provide a service to the user. The broadcasting receiver accesses an entry point, which is registered in the broadcasting receiver or input by the user, in order to find the service discovery server. The entry point indicates a service discovery entry point of an IPTV portal (or a system operator (SO)), that is, a server for entering into a service, information on the server or entrance into the service. The entry point may be directly registered in the broadcasting receiver by the user or may be registered in the broadcasting receiver via the Internet.

The broadcasting receiver accesses the entry point using an IP address/port of the entry point or a domain name system (DNS) uniform resource locator (URL) in order to obtain discovery information. The broadcasting receiver receives a service provider discovery record including access information of the service provider from the accessed entry point.

The broadcasting receiver analyzes the service provider discovery record and accesses the service provider server for providing the service desired by the user. The service provider provides the broadcasting receiver with the service discovery record including the access information of the server for storing the service.

The service discovery record includes a content on demand discovery record, a package discovery record, and a broadcast discovery record. The broadcast discovery record includes a variety of information on live media contents such as real-time image streams.

The broadcasting receiver analyzes the service discovery record, accesses the service server, and receives the service. In a case of transmitting/receiving service provider discovery information, service discovery information or the like, a protocol such as a SD&S protocol or a Service Discovery Protocol (SDP) may be used.

Hereinafter, a case where a plurality of services for providing a plurality of video streams are simultaneously provided as one service is provided will be described. The plurality of video streams may include video signals, which are associated with each other, or video signals, which are not associated with each other, in one service.

Hereinafter, for convenience of description, it is assumed that a service for providing the plurality of video streams is transmitted/received to/from live media. Any one of the plurality of video streams included in the service is referred to as a main video stream and the other video streams are referred to as supplementary video streams.

For example, the main video stream may include a general image and the supplementary video streams may include subsidiary images of the main video stream.

For convenience of description, a service for providing the main video stream and a service for providing the supplementary video streams are referred to as a main service and a supplementary service, respectively.

The service provider provides the broadcasting receiver with the broadcast discovery record of the service for providing the plurality of video streams. The broadcast discovery record of the main service and the broadcast discovery record of the supplementary service may be transmitted to the broadcasting receiver. The supplementary service information (hereinafter, referred to as service trigger information) may be included in the broadcast discovery record of the main service such that the broadcasting receiver receives the main service and the supplementary service. The service trigger information of the supplementary service may include the location or the identifier of the broadcast discovery record describing the supplementary service.

FIG. 6 is a view showing the broadcast discovery record (BroadcastOffering) of the main service. In a service list included in the broadcast discovery record of FIG. 6, a single service includes the supplementary service information (SupplementaryService) (service trigger information).

The broadcast discovery record includes OfferingBase information and ServiceList information of at least one (1...∞) service. The ServiceList information includes a ServiceDescriptionLocation element and a SingleService element. The SingleService element includes information on a low-level service included in the service provided by the broadcast discovery record.

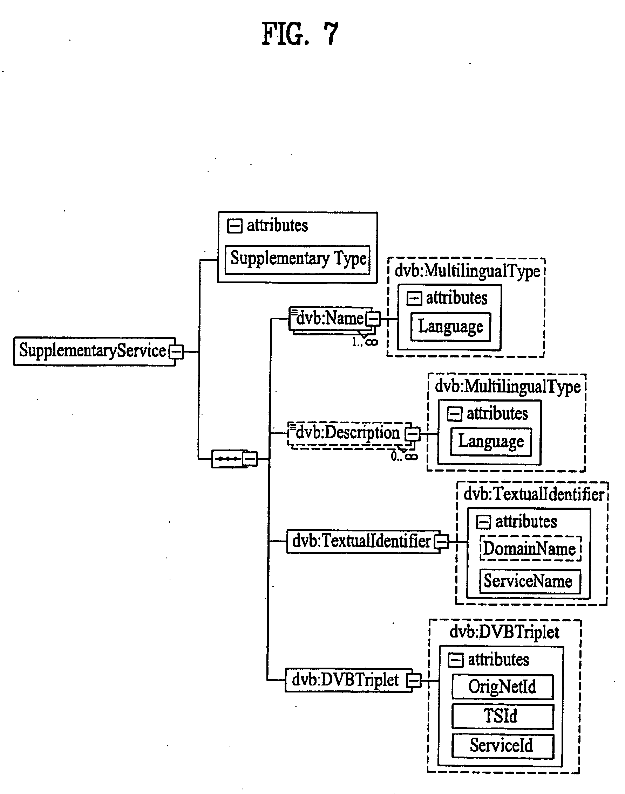

The SingleService element including the information on one service includes a ServiceLocation element indicating the location of the service, a TextualIdentifier element including the textual identifier for the location of the service, and a DVBTriplet element for providing the identifier for the location of the service. (In fig. 7, the DVBTriplet method according to a digital video broadcasting (DVB) system is illustrated as the identifier for the location of the service). The SingleService element includes a ServiceInformation (SI) element such that the broadcasting receiver outputs the service. The SingleService element may further include an AudioAttributes element of an audio stream and a VideoAttributes element of a video stream included in the service.

The elements included in the SI element will now be described. A Name element includes the name of the service represented by at least one language. A Description element includes the description of the service which can be represented by at least one language. A ServiceDescriptionLocation element includes an identifier for identifying the service discovery record (e.g., the BCG record) including the SI. For example, the service discovery record (e.g., the BCG record) according to the identifier of the service discovery record (e.g., the BCG record) specified by the ServiceDescriptionLocation element can describe detailed service information (SI).

A ContentGenre element indicates the genre of the service. A ReplacementService element includes the identifier of the replacement service of the service. A MosaicDescription element includes information identifying each cell of a mosaic service in the case where a mosaic service such as screen division is provided. A ServiceAvailability element may include information indicating whether or not the service is available. An AnnouncementSupport element indicates an announcement type supported by the service and may include, for example, emergency information or emergency road state information.

The SI element may include a SupplementaryService element describing supplementary service information. The supplementary service information is information which by the broadcast discovery record of the supplementary service is searched, so the supplementary service information may be called service trigger information. The broadcasting receiver can simultaneously receive the main service and the supplementary service using the supplementary service trigger information in the broadcast discovery record for providing the main service.

FIG. 7 is a view showing the SupplementaryService element shown in FIG. 6. The SupplementaryService element includes the supplementary service information (service trigger information). Accordingly, the broadcasting receiver can receive and output the supplementary service together with the main service using information included in the SupplementaryService element.

The SupplementaryService element includes a Supplementary Type element, a Name element, a Description element, a TextualIdentifier element, and a DVBtriplet element.

The Name element includes the name of the supplementary service and the Description element includes the description of the supplementary service. The TextualIdentifier element may include information identifying a location of the supplementary service, such as DomainName information and ServiceName information.

In the DVBTriplet element, an "OriginNetId" element includes a network ID of the originating delivery system, a "TSId" element includes a transport stream identifier, and a "ServiceId" element includes service identifier of the transport stream. In FIG. 7, the elements denoted by dotted lines are optionally included and the elements denoted by solid lines are mandatorily included in the SupplementaryService element.

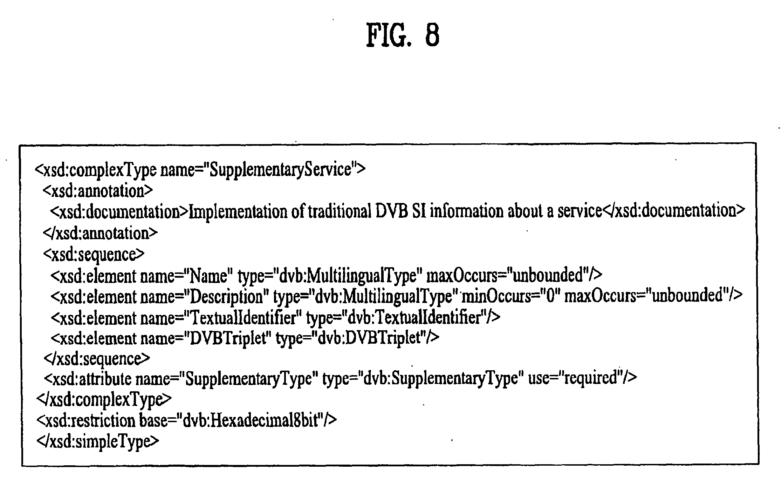

FIG. 8 is a view showing an extensible Markup Language (XML) schema of the SupplementaryService element of FIG. 7. The broadcast discovery record may be transmitted to the broadcasting receiver by the XML schema according to the SD&S or SDP.

In the XML schema of FIG. 8, the type of the Name element is "dvb:MultilingualType" and "maxOccurs" is unbounded. In the example of FIG. 8, the SupplementaryService information includes the Description element, the TextualIdentifier element and the DVBTriplet element.

The attribute of the supplementary service information (service trigger information) includes a SupplementaryType.

The broadcast discovery record includes a transport stream (TS)-Full SI method and a TS-Optional SI method according to the format for providing the service information to the broadcasting receiver. In the TS-Full SI method, only the SI included in the TS is used for finding the TS configuring the service in the service discovery record via the IP. Accordingly, if the TS-Full SI method is used, the broadcasting receiver can receive the terrestrial broadcast service via the IP network.

In contrast, in the TS-Optional SI method, separate service related information is added to the service discovery record in addition to the SI information included in the TS and the broadcasting receiver finds the TS using the SI information in the TS and using the added service related information. For example, in the case where a service description table (SDT) is used in addition to the DVB SI in the DVB system, the TS-optional SI method is used. Accordingly, if the TS-Optional SI method is used, for example the broadcasting receiver obtains the terrestrial broadcast service, obtains additional information from the IP network, and outputs the service using the additional information. Hereinafter, an example in which the service trigger information of the supplementary service is added to the broadcast discovery record will now be described and the following embodiment corresponds to the TS-Optional SI method. However, the broadcast discovery record of the supplementary service may be transmitted to the broadcasting receiver independent of the broadcast discovery record of the main service, unlike the following example. At this time, the broadcasting receiver can simultaneously output the main service and the supplementary service using the respective broadcast discovery records.

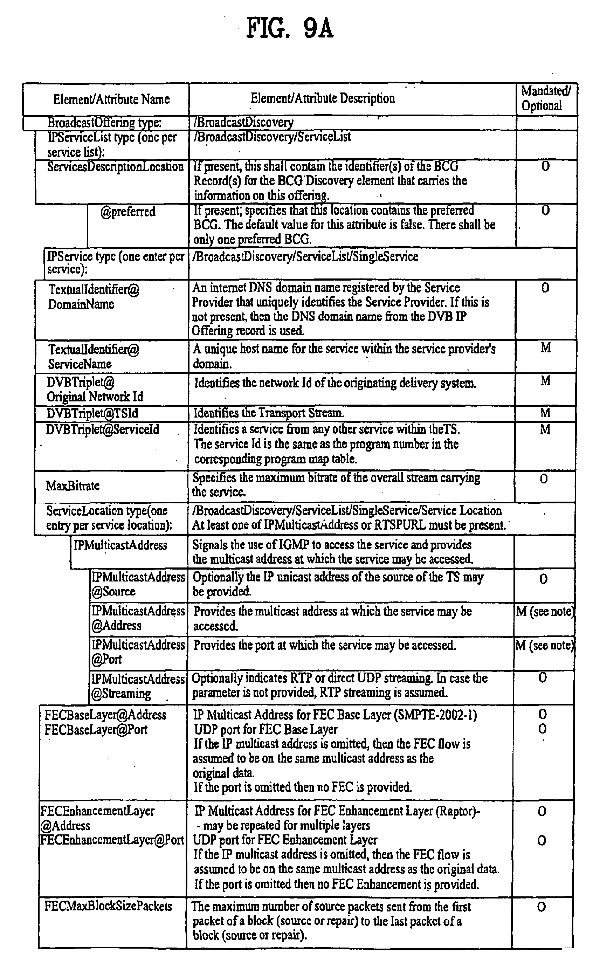

FIGs. 9A to 9C are views showing the broadcast discovery record describing the information for allowing the service including the plurality of video streams to be discovered and received. As shown in FIGs. 9A to 9C, the broadcast discovery record of the main service may include the service trigger information of the supplementary service. FIGs. 9A to 9C show the example of one broadcast discovery record, which is divided into three portions in the drawings. In the elements or the attributes shown in FIGs. 9A to 9C, the detailed description of the elements or the attributes shown in FIGs. 5 and 6 may refer to FIGs. 5 and 6.

The broadcast discovery record information is included in "BroadcastDiscovery" and the service list information is included in "BroadcastDiscovery/ServiceList".

"ServiceDescriptionLocation" may include the identifier of the BCG record of the BCG discovery element. "@preferred" includes the location information of the preferred BCG. The BCG indicates the content guide information of the DVB-IP corresponding to an electronic program guide (EPG) of an ATSC system.

"IPservice type" for the service transmitted according to the IP is included in "BroadcastDiscovery/Service/SingleService".
"TextualIdentifier@DomainName" may include Internet DNS Domain name information identifying the service provider and "TextualIdentifier@ServiceName" includes host name information of the service provided by the service provider.

"DVBTriplet" includes DVB Triplet information identifying the location of the service. "DVBTriplet@OrigNetId" includes original_network_id information and "DVBTriplet@TSId" includes transport_stream_id information, and "DVBTriplet@ServiceId" includes service_id information. "MaxBitrate" includes maximum bit rate information of the stream.

"BroadcastDiscovery/ServiceList/SingleService/ ServiceLocation" may include entry information of the location information of the service. The entry information of the location information of the service may include, for example, at least one piece of IPMulticastAddress information or RTSPURL information.

"IPMulticastAddress" signals the use of the IGMP to access the service and provides the multicast address at which the service may be accessed. "IPMulticastAddress" includes information on a URL and a port at which the service may be accessed.

"IPMulticastAddress@Source", "IPMulticastAddress@Address" and "IPMulticastAddress@Port" provide the IP unicast address of the source of the TS, the multicast address at which the service may be accessed, and the port at which the service may be accessed, respectively.

"IPMulticastAddress@Streaming" includes RTP streaming or direct user datagram protocol (UDP).

"FECBaseLayer@Address" and "FECBaseLayer@Port" include an IP multicast address for a Forward Error Correcting (FEC) Base Layer (SMPTE-2002-1) and a UDP port for the FEC Base Layer, respectively.

"FECEnhancementLayer@Address" and "FECEnhancementLayer@Port" include an IP multicast address for FEC Enhancement Layer (Raptor) and a UDP port for the FEC Enhancement Layer, respectively.

"FECMaxBlockSizePackets" includes a maximum number of source packets sent from a first packet of a block to a last packet of the block.

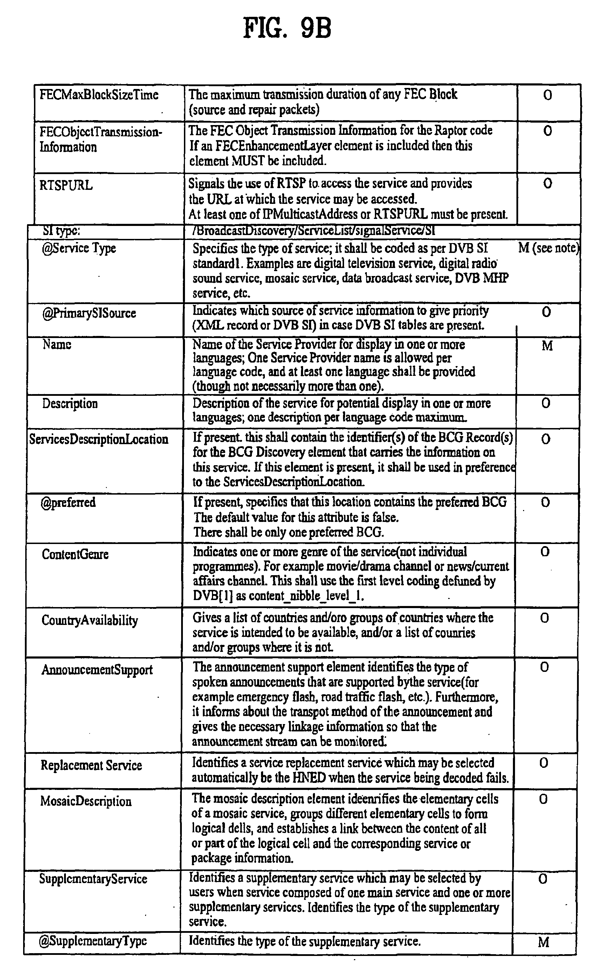

"FECMaxBlockSizeTime" of FIG. 9B includes a maximum transmission duration of an FEC packet block. "FECObjectTransmissionInformation" includes FEC object transmission information for the Raptor code.

"RTSPURL" signals the use of RTSP to access the service and provides the URL at which the service may be accessed.

The SI information of the service is included in "BroadcastDiscovery/ServiceList/SingleService/SI".

"@ServiceType" includes the type of the service, which may be coded as per the DVB SI standard. "@PrimarySISource" includes priority between the DVB SI information and the XML record in the case where DVB SI information is present.

"Name", "Description", "ServiceDescriptionLocation" and "@preferred" include the name of the service, the description of the service, the identifier of the BCG record including the service information, and the location of the preferred BCG, respectively.

"ContentGenre", "CountryAvailability", "AnnouncementSupport" and "ReplacementService" include the genre of the service, the country or the country group where the service can be received, the identifier of the type of the announcement supported by the service, and the replacement service when the service being decoded fails in the broadcasting receiver, respectively. "MosaicDescription" identifies the elementary cells of a mosaic service, groups different elementary cells to form logical sells and establishes a link between the content of all or part of the logical cell and the corresponding service or package information.

The basic information on the supplementary service which is provided as one service together with the main service may be included in "BroadcastDiscovery/ServiceList/SingleService/SI".

"SupplementaryService" includes information identifying the supplementary service as the supplementary service information (service trigger information). "@SupplementaryType" includes information identifying the type of the supplementary service.

In the broadcast discovery record, "Name" and "Description" include the name of the supplementary service and the description of the supplementary service, respectively. "TextualIdentifier@DomainName" includes the Internet DNS domain name identifying the service provider of the supplementary service and "TextualIdentifier@ServiceName" includes the host name of the service provider of the supplementary service.

"DVBTriplet" includes the DVB Triplet information of the supplementary service. "DVBTriplet@OrigNetId" includes the original_network_id information, "DVBTriplet@TSId" includes the transport_stream_id information, and "DVBTriplet@ServiceId" includes the service_id information.

The types of the information included in the supplementary service element are only exemplary. That is, other information may be added from the above-described information and any information may be removed.

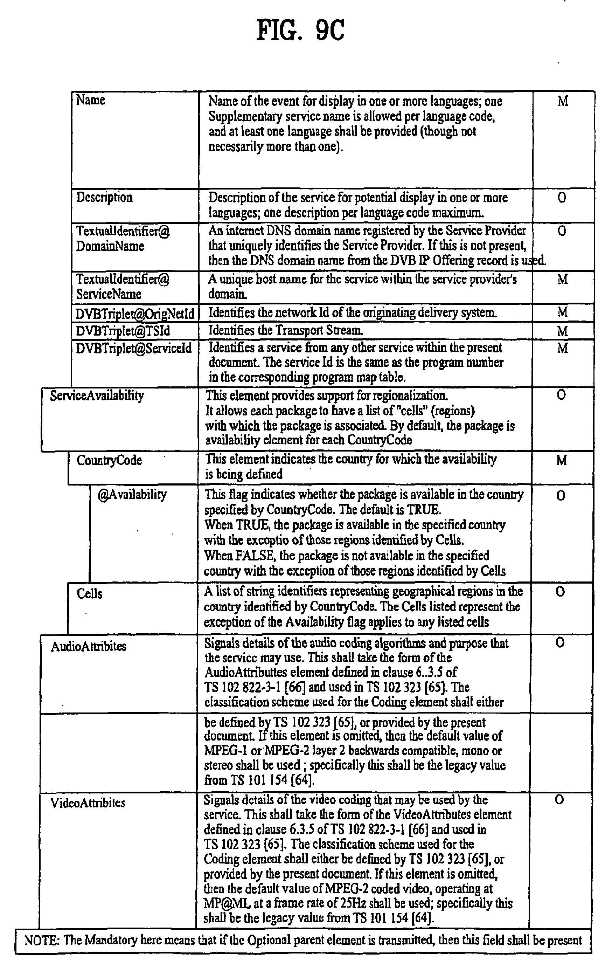

In FIG. 9C, "Name", "Description", "TextualIdentifier@DomainName", "TextualIdentifier@ServiceName", "DVBTriplet@OrigNetId", "DVBTriplet@TSID" and "DVBTriplet@ServiceId" may be included in the supplementary service and the description thereof is equal to the description of FIG. 6.

When the user selects the supplementary service information included in the main service using the broadcasting receiver, the broadcasting receiver can receive and parse the broadcast discovery record of the supplementary service or provide the supplementary service using the broadcast discovery record of the received supplementary service.

"ServiceAvailability", "AudioAttribute", "VideoAttribute" and the elements or the attributes belonging thereto of FIG. 9C are equal to the description of FIG. 6.

"ServiceAvailability" provides a list of cells (or regions) with which the package is associated. By default, the single service is available for each region. "CountryCode" includes the country for which the availability is being defined. "@Availability" includes information indicating whether the service is available in the country specified by "CountryCode". "Cells" includes information indicating geographical regions in the country identified by "CountryCode".

"AudioAttributes" includes information on the audio coding algorithms and purpose that may be used by the service and "VideoAttributes" includes detailed information on the video coding that may be used by the service.

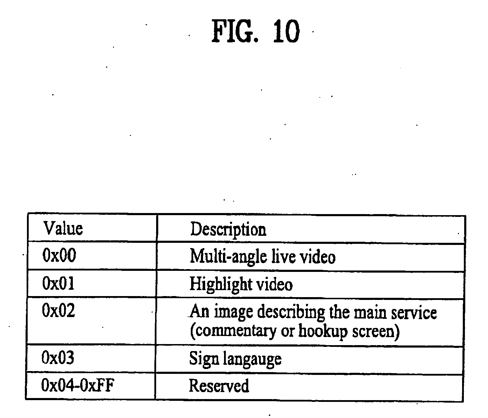

FIG. 10 is a view showing the types of the supplementary service. The supplementary service may include the video stream which can provide the service associated with the main service (the service does not need to be associated with the main service).

FIG. 10 shows which type of video signal is included in the supplementary video stream transmitted by the supplementary service. In FIG. 10, if the value of the type of the supplementary video stream is 0x00, it is indicated that the supplementary video stream is a multi-angle video stream. That is, the video signal of the main service and the supplementary video signal of the supplementary service may be video signals having different viewing angles according to the multi-angle.

In the example of FIG. 10, if the value of the type of the supplementary video stream is 0x01, it is indicated that the video signal of the supplementary service is a highlight video signal of the main service. If the value of the type of the supplementary video stream is 0x02, it is indicated that the video signal of the supplementary service is an image describing the video signal of the main service, for example, the stream which can be output in the PIP form on the screen such as a commentary screen or a hookup screen. Accordingly, the user can simultaneously view the sports game and the commentary screen according to the selection of the user.

Alternatively, if the value of the type of the supplementary video stream is 0x03, it is indicated that the video signal of the supplementary service is a separate video stream which is intended to be provided to disabled people. For example, for auditory handicapped people (deaf people), the video signal including the sign language of the program may be transmitted/received together with the main service. When the value of the type of the video stream of the supplementary service is obtained, the broadcasting receiver outputs the supplementary service to the user and outputs the supplementary service selected by the user.

The broadcasting receiver may control the supplementary video stream to be output on the screen if a separate video/audio stream is desired to be reproduced.

FIG. 10 shows an example of the values of the types. A variety of types and values such as the video coding type and the resolution of the image may be used in the supplementary video service.

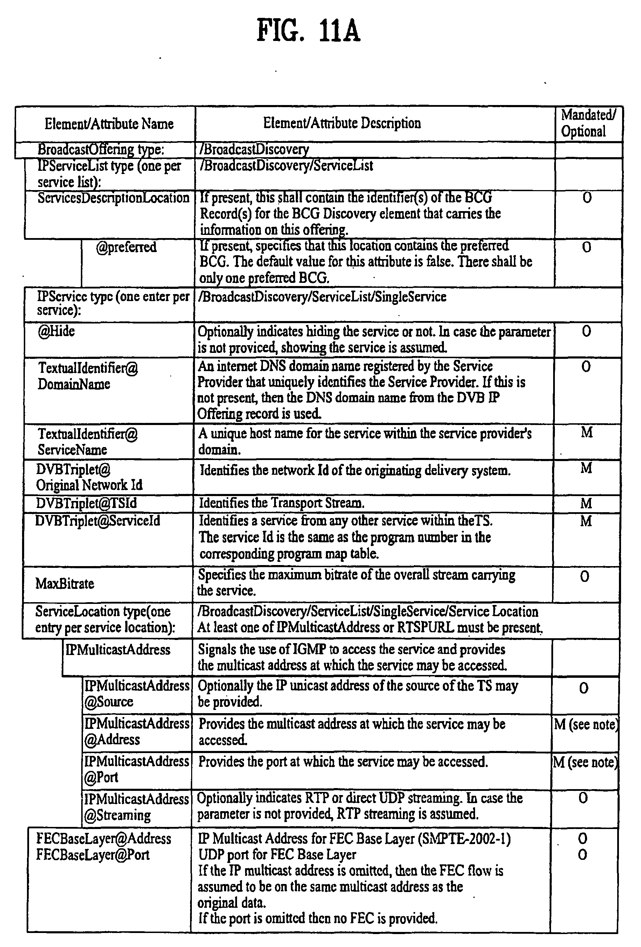

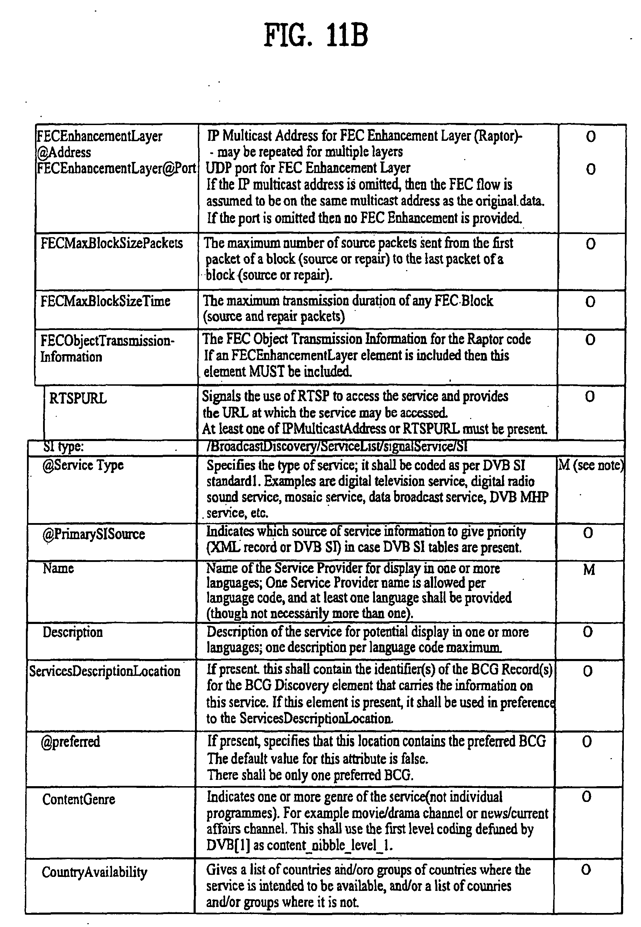

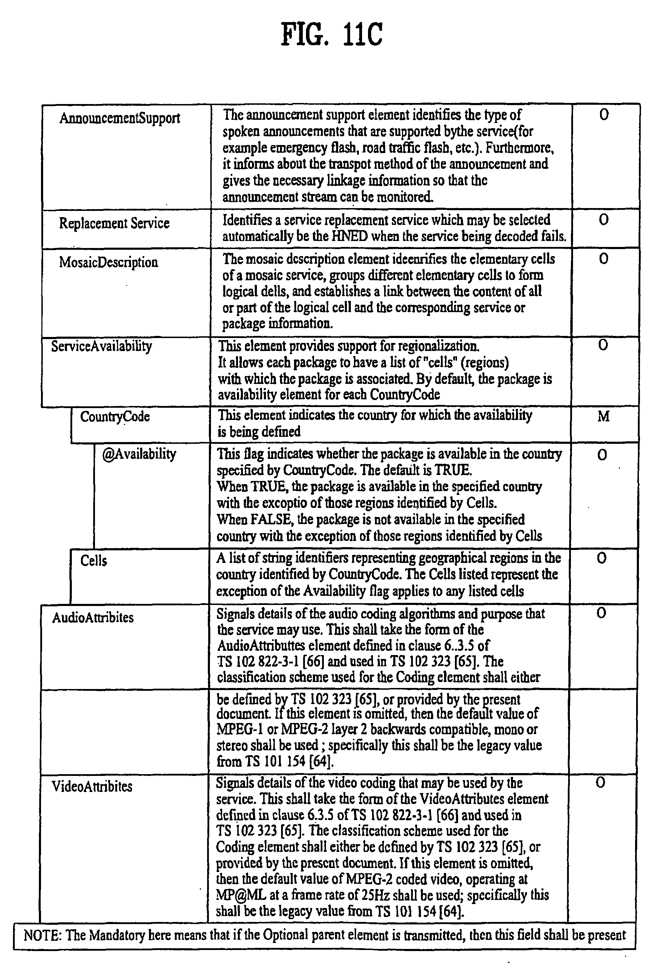

FIGs. 11A to 11C are views showing another example of the broadcast discovery record of the service including the plurality of video streams. FIGs. 11A to 11C show the example of one broadcast discovery record, which is divided into three portions in the drawings.

In the broadcast discovery record of FIGs. 11A to 11C, the broadcast discovery record of the main service does not include the supplementary service information unlike to FIGs. 9A to 9C. That is, the information corresponding to "SupplementaryService" is not included unlike FIGs. 9A to 9C.

The broadcast discovery record of FIGs. 11A to 11C includes information indicating whether or not the supplementary service information (service trigger information) is displayed on the screen. The information indicating whether or not the supplementary service information is displayed may be included as a low-level element of "BroadDiscovery/ServiceList/Singleservice". In the example of FIGs. 11A to 11C, the information indicating whether or not information indicating association or non-association of supplementary service is displayed on the screen is included in "@Hide" which is the attribute of the IPservice.

"@Hide" includes the information indicating whether or not information indicating the association or the non-association of the service trigger information of the supplementary service is displayed on the screen. If this attribute is not included in the broadcast discovery record, information indicating that the supplementary service is associated is displayed on the screen. In FIG. 11A, the description of the residual elements and attributes except for "@Hide" refers to the description of FIGs. 9A to 9C.

The broadcasting receiver can receive and store the broadcast discovery record of the main service and the broadcast discovery record of the supplementary service from the service discovery server as the broadcast discovery record. The broadcast discovery record of the main service may include the supplementary service information (supplementary service trigger information).

The broadcasting receiver can access the service server for providing the selected service and receive the service streaming using the stored broadcast discovery record. The access addresses of the main service and the supplementary service may be equal to each other or different from each other. If the access addresses are equal to each other, the streams of the services may be identified using the identifiers of the streams.

The broadcasting receiver can display a list of services to be provided on the screen, using the information indicating whether or not the supplementary service information (service trigger information) is displayed on the screen. The user can select and view a desired service in the displayed list.

If the list is output, the main service information may be displayed in the list and the supplementary service information may not be displayed. A list of supplementary service information may be separately output on the screen while the main service is provided.

If the "@Hide" information shown in FIG. 11A is not included or information for disallowing the supplementary service information to be hidden is included in the broadcast discovery record, the list of supplementary services and the list of main services are output to the broadcasting receiver. The main service and the supplementary service may be provided independently or together according to the selection of the user.

The user may select the main service from the service list and receive the service. If the supplementary service associated with the main service is desired to be viewed, the list of supplementary services is displayed on the screen and a desired supplementary service is selected and viewed from the displayed list of supplementary services. It may be determined whether or not the supplementary service is provided according to a specific condition. For example, the supplementary service may be provided only when an additional fee is paid.

The broadcasting receiver accesses the selected service server using the access information included in the broadcast discovery record.

It is assumed that the video signals according to various camera angles are provided as a plurality of multiple video stream services. For example, in the case where the contents for sports game are served, the plurality of video streams of the video signals obtained by filming the sports game at various angles can be generated. The plurality of video streams of the video signals obtained by allocating respective cameras to players of the sports game and filming the sports game by the cameras may be provided.

The video signal filmed at the upper side of the stadium of the sports game may be provided as the main service and the video signals filmed at the left and right sides of the stadium may be provided as the supplementary services. In the case where the video signals are provided to live media, information on the main service and the supplementary services may be transmitted in a state of being included in the broadcast discovery record.

The broadcast discovery record of the main service may include the service trigger information of the supplementary services. For example, the supplementary service type, name, description, the textual identifier domain name, the textual identifier service name and the DVB triplet information shown in FIG. 6 may be included in the service trigger information of the supplementary service.

The service provider can provide the broadcasting receiver with the broadcast discovery record of the video signal filmed at the upper side of the stadium, the broadcast discovery record of the video signal filmed at the left side of the stadium and the broadcast discovery record of the video signal filmed at the right side of the stadium. The broadcasting receiver can receive and store the records.

The broadcasting receiver displays a service list on the screen using the stored information. In the case where the service hiding information is included in the broadcast discovery record of the video signals filmed at the left and right sides, the video services filmed at the left and right sides may not be displayed in the supplementary service list.

The user can select and view the video signal filmed at the upper side of the stadium of the sports game among the services displayed in the service list. When the supplementary service associated with the video service filmed at the upper side of the stadium is displayed in the list, the user can select and view the video service filmed at the left or right side of the stadium. At this time, the user may view only the selected supplementary service and simultaneously view the main service and the selected supplementary service.

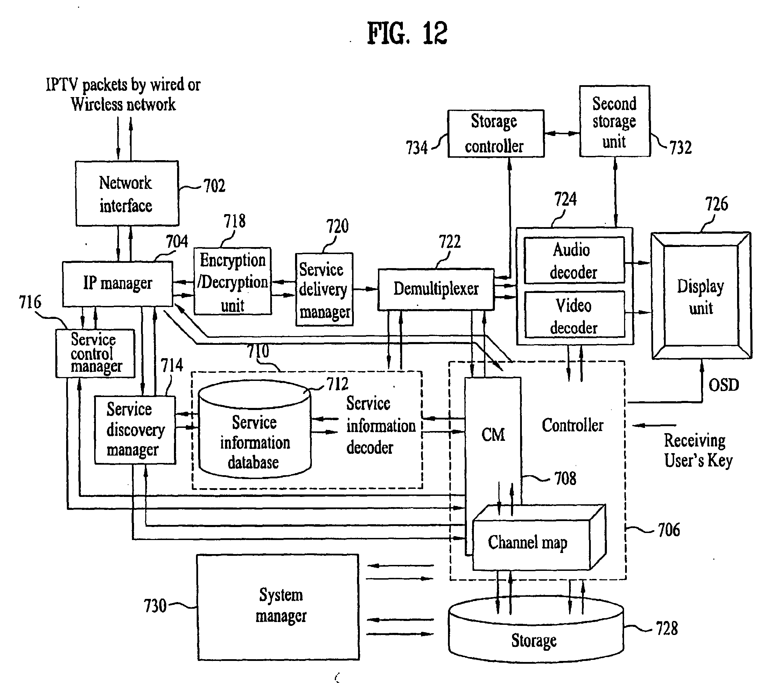

FIG. 12 is a block diagram showing the broadcasting receiver according to an embodiment of the present invention. The broadcasting receiver of FIG. 12 receives the broadcasting single according to the IP. The broadcasting receiver of FIG. 12 includes a network interface 702, an IP manager 704, a controller 706, a channel manager (CM) 708, a service information decoder 710, a service information database 712, a service discovery manager 714, a service control manager 716, a encryption/decryption (conditional access system/digital right management (CAS/DRM)) unit 718, a service delivery manager 720, a demultiplexer 722, an audio/video decoder 724, a display unit 726, a first storage 728, a system manager 730, a second storage 732, and a storage controller 734. The service information decoder 710, the demultiplexer 722, and the audio/video decoder 724 may be collectively called a decoder.

In FIG. 12, the IP manager 704, the CM 708, the service discovery manager 714, the service control manager 716, the encryption/decryption unit 718, the service delivery manager 720 and the system manager 730 can be driven by the controller 706 in software.

The network interface 702 receives packets from a network and transmits packets transmitted by the broadcasting receiver to the network.

The IP manager 704 can process transmission/reception packets according to an IP protocol for setting source and destination information with respect to the packets transmitted by the receiver and the packets received by the receiver. The IP manager 704 parses the received IP packet and generates and outputs an IP packet as the packet to be transmitted.

The encryption/decryption unit 718 performs a conditional access system (CAS) function and a digital rights management (DRM) function with respect to the packets received from the IP manager 704 and the packets received from the service delivery manager 720. Accordingly, the packets to be transmitted are encrypted and the received packets are decrypted.

The service delivery manager 720 can control a service including the digital contents received by the IP protocol in real time. For example, in a case where real-time streaming data is controlled, service data can be controlled using a real-time transport protocol/RTP control protocol (RTP/RTCP). The real-time streaming data can be transmitted using the RTP, and the service delivery manager 720 can parse the received data packets according to the RTP and output the parsed information to the demultiplexer 722. The network reception information is fed back to a server for providing a service using the RTCP.

The demultiplexer 722 demultiplexes a program specific information (PSI) section, a program and service information protocol (PSIP) section or a service information (SI) section and video/audio packets.

The service information decoder 710 decodes the sections associated with multiplexing of the service demultiplexed by the demultiplexer 722 and stores the decoded service information in the service information database 712. The service information decoder 710 may decode the service information included in the service discovery record received by the service discovery manager and store the decoded service information in the service information database 712.

The video/audio decoder 724 decodes the video data and the audio data demultiplexed by the demultiplexer 722. The video/audio data decoded by the video/audio decoder 724 is output via an output unit. The output unit may include a speaker for outputting an audio signal and a display unit for outputting a video signal. In the example of FIG. 12, the video data is provided to the user via the display unit 726 and the decoded audio data is provided to the user via the speaker (not shown).

The service control manager 716 selects and controls the service. For example, in the case where the user selects a live broadcasting service using the existing broadcasting method, the service including the digital contents is selected and controlled using an IGMP or a real-time streaming protocol (RTSP). In the case where the user selects a service such as VOD, the service including the digital contents is selected and controlled using the RTSP. The RTSP can provide a trick mode to the real-time streaming. The service control manager can control the broadcasting contents included in the service to be output in real time.

The service discovery manager 714 controls information necessary for selecting a service provider for providing a service. The service discovery manager 714 receives a control signal for channel selection from the CM 708 or the controller 706 and discovers a service which can be provided by the service server, according to the control signal. The service discovery manager 714 can parse the service discovery record for obtaining the digital contents included in the service. The parsed service discovery record may be stored in the service information database 712.

The service discovery manager 714 may parse the broadcast discovery record of the main service including service trigger information of the supplementary service information shown in FIGs. 9A to 9C or the broadcast discovery record of the supplementary service. The parsed service information of the main service and the parsed service information of the supplementary service may be stored in the service information database 712 or may be transmitted to the controller 706. The service discovery manager 714 may parse the information indicating that the supplementary service is associated as shown in FIGS. 11A to 11C. The parsed information may be stored in the service information database 712.

The CM 708 can generate a channel map. The CM 708 adds the service information parsed by the service discovery manager 714 and the service information, which is demultiplexed by the demultiplexer 722 and is decoded by the service information decoder 712, and generates and stores the channel map.

The CM 708 allows a service channel to be selected according to the key input received by the controller 706. The CM 708 can control the demultiplexer 722 to selectively output an audio/video packet identifier (PID) of the channel selected by the user.

The first storage 728 stores setup data of the system. As the first storage, a nonvolatile RAM (NVRAM) or a flash memory may be used.

The system manager 730 controls the whole operation of the receiver system via a power source.

The second storage 732 receives and stores the video/audio data from the video/audio decoder 724 under the control of the storage controller 734. The second storage 732 performs a personal video recorder (PVR) function, and the storage controller 734 can control the input/output of the digital contents such that the second storage 732 performs the PVR function.

The controller 706 controls the operation of the receiver according to a user control signal received from a graphic user interface (GUI) or an on screen display (OSD) for the user. For example, the controller 706 receives the key input for the channel selection from the user and transmits the key input signal to the CM 708.

The controller 706 can control the above-described components such a desired service is output according to the key input of the user, and, for example, can control the digital contents to be provided to the user.

The controller 706 may control the service discovery manager 714 and the service delivery manager 720 to operate the CM 708 such that the selected service is output.

When the service discovery manager 714 parses the broadcast discovery record, the controller 706 may receive the service trigger information of the supplementary service from the service discovery manager 714 or receive the service trigger information stored in the service information database 712.

When the information for disallowing at least one of the supplementary service information to be output is received from the service discovery manager 714, the controller 706 controls the service trigger information of the supplementary service not to be output to the user. However, even in this case, when the user instructs the output of the supplementary service information, the controller 706 controls an application for outputting a menu of the GUI or OSD or a user menu such that a list of the supplementary service information is outputted to the user.

Hereinafter, a method of receiving the broadcast discovery record at the components of FIG. 12 and providing a service by a plurality of video streams will be described in detail.

The service provider discovery information may be transmitted from a service entry point according to the SD&S protocol or the SDP. The IP manager 704 transmits the packet including the service provider discovery information to the service discovery manager 714.

The service discovery manager 714 transmits/stores the information included in the service provider discovery record in the service information database 712. The service provider discovery record may include the access information of the service provider.

The broadcasting receiver may access the service provider server using the access information of the service provider and receive the packet including the service discovery record information from the service provider. The packet including the service discovery record information may be transmitted/received according to the SD&S protocol or the SDP.

The service discovery record includes the broadcast discovery record, the CoD discovery record and the package discovery record.

In order to receive the service according to the plurality of video streams, the broadcasting receiver can receive the broadcast discovery record describing the main service and obtain the service trigger information of the supplementary service.

The packet including the broadcast discovery record information of the main service or the packet including the broadcast discovery record information of the supplementary service is transmitted to the IP manager 704 via the network interface 702. The IP manager 704 checks whether or not the destination of the received packet is this broadcasting receiver and transmits the packet to the service discovery manager 714. The service discovery manager 714 parses the broadcast discovery record included in the received packet. The parsed information is stored in the service information database 712.

The broadcast discovery record information of the main service may include the access information of the contents included in the main service and the information describing the contents. The broadcast discovery record information of the main service may include the service trigger information of the supplementary service. The controller 706 may discover the broadcast discovery record information of the supplementary service according to the service trigger information of the supplementary service and obtain the access information of the contents included in the supplementary service, the information describing the contents and the information describing the contents included in the supplementary service.

The controller 706 controls the channel information for transmitting the video stream included in the supplementary service desired by the user to be received and controls the service to be accessed according to the channel map.

The controller 706 may control the service server for storing the video contents, which are desired to be viewed by the user, to be accessed. The controller 706 may allow only the service of the switched channel to be viewed or allow the service of the selected channel to be viewed together with the channel which is currently viewed.

The controller 706 can display a list of services to be provided on the screen via the OSD according to the request of the user. The user can select the service, which is desired to be viewed, in the displayed list and receive the service. The controller 706 may control the main service list to be displayed and control the supplementary service list according to the service trigger information of the supplementary service not to be displayed. Alternatively, the controller 706 may control the main service list to be displayed with the supplementary service list according to the service trigger information of the supplementary service not to be displayed.

When only the main service information is displayed in the list, the user can select and receive the main service. When the user wants to view the supplementary service associated with the main service, a control signal may be sent to the controller 706 such that a list of supplementary services is displayed on the screen. The controller 706 may provide the service selected by the user using the service discovery record stored in the service information database 712 such that the supplementary service selected by the user is output.

In order to receive the service including the plurality of video streams, the controller 706 controls the IP manager 704 and the network interface 702 so as to transmit the signal for accessing the service server for providing the selected service. The contents provided by the server are transmitted to the IP manager 704 via the network interface 702. The contents are transmitted to the demultiplexer 722 via the encryption/decryption unit 718 and the service delivery manager 720.

The demultiplexer 722 may demultiplex the streams configuring the received contents and transmit the demultiplexed data to the audio/video decoder 724. The audio/video decoder 724 decodes the demultiplexed data and outputs the decoded data to the display unit 726.

The controller 706 may select and display only any one of the main service and the supplementary service on the screen. Alternatively, the controller 706 may receive and display the stream of the supplementary service on a sub screen while the main service is displayed on the main screen. In the case where the main service and the supplementary service are simultaneously displayed on the screen, the control unit 706 may use a picture in picture (PIP) or screen division.

As described above, according to the present embodiment, one service can be provided by a plurality of video streams. The user can view a combination of several associated video streams or select and view a specific video stream. In addition to the video streams, a combination of several audio broadcasting streams or data broadcasting streams can be selected and viewed.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. A method of transmitting a digital content service, the method comprising:
generating service discovery information being service information, SI, describing a main service including a first digital content, the service discovery information containing a supplementary service element including supplementary service information which identifies a supplementary service including a second digital content, **characterized in that** the supplementary service is capable of being provided simultaneously together with the main service; and
transmitting the service discovery information in accordance with an internet protocol, and providing, when the supplementary service element is parsed, the supplementary service simultaneously together with the main service to a user based on the parsed supplementary service element.

2. The method of claim 1, wherein each of the first digital content and the second digital content includes a video stream.

3. The method of claim 2, wherein an image provided by the second digital content is one of a multi-angle image, a highlight image, a commentary image and a sign language image associated with an image provided by the first digital content.

4. The method of any one of claims 1 to 3, wherein the supplementary service element includes a name element, a description element, a textual identifier and a service location identifier of the supplementary service.

5. The method of claim 4, wherein the service location identifier of the supplementary service includes a network identifier, a transport stream identifier and a service identifier.

6. A method of receiving a digital content service, the method comprising:
receiving service discovery information being service information, SI, describing a main service including a first content, the service discovery information containing a supplementary service element including supplementary service information which identifies a supplementary service including a second content, wherein the supplementary service is capable of being provided simultaneously together with the main service;
parsing the service discovery information;
receiving in accordance with an internet protocol the main service based on the parsed service discovery information;
parsing the supplementary service element in the parsed service discovery information and receiving the supplementary service including the second content simultaneously together with the main service based on the parsed supplementary service element.

7. The method of claim 6, wherein each of the first digital content and the second digital content includes a video stream.

8. The method of claim 7, wherein an image provided by the second digital content is one of a multi-angle image, a highlight image, a commentary image and a sign language image associated with an image provided by the first digital content.

9. The method of any one of claims 6 to 8, wherein the supplementary service element includes a name element, a description element, a textual identifier and a service location identifier of the supplementary service.

10. The method of claim 9, wherein the service location identifier includes a network identifier, a transport stream identifier and a service identifier.

11. An apparatus for receiving a digital content service in accordance with an internet protocol, the apparatus comprising:
service discovery manager (714) configured to parse service discovery information being service information, SI, describing a main service including a first content, the service discovery information containing a supplementary service element including supplementary service information which identifies a supplementary service including a second content, wherein the supplementary service is capable of being provided simultaneously together with the main service;
a service information data storage (710) configured to store the parsed service discovery information containing the supplementary service element; and
a controller (706) configured to generate a channel map having a service list of the main service and the supplementary service and control the main service to be provided according to the parsed service discovery information,
wherein when the service discovery manager (714) parses the supplementary service element the controller (706) controls the supplementary service to be provided simultaneously with the main service based on the parsed supplementary service element.

12. The apparatus of claim 11, wherein each of the first digital content and the second digital content includes a video stream.

13. The apparatus of claim 12, wherein an image provided by the second digital content is one of a multi-angle image, a highlight image, a commentary image and a sign language image associated with an image provided by the first digital content.

14. The apparatus of any one of claims 11 to 13, wherein the supplementary service element includes a network identifier, a transport stream identifier and a service identifier.

15. The apparatus of any one of claims 11 to 14, wherein the controller (706) receives a control signal from a user, and controls the supplementary service to be received and outputted.

## Patentansprüche

1. Verfahren der Übertragung eines digitalen Inhalt-Dienstes, mit
Erzeugen von Dienstfindungsinformationen, die Dienstinformationen SI sind, die einen Hauptdienst mir einem ersten digitalen Inhalt beschreiben, wobei die Dienstfindungsinformationen ein Zusatzdienstelement mit Zusatzdienstinformationen enthalten, die einen Zusatzdienst mit einem zweiten digitalen Inhalt identifizieren,
**dadurch gekennzeichnet, dass**
der Zusatzdienst gleichzeitig zusammen mit dem Hauptdienst bereitgestellt werden kann, und mit
Übertragen der Dienstfindungsinformationen entsprechend einem Internetprotokoll und, wenn das Zusatzdienstelement analysiert wird, Bereitstellen des Zusatzdienstes gleichzeitig zusammen mit dem Hauptdienst für einen Benutzer beruhend auf dem analysierten Zusatzdienstelement.

2. Verfahren nach Anspruch 1, wobei der erste digitale Inhalt und der zweite digitale Inhalt jeweils einen Videostrom enthält.

3. Verfahren nach Anspruch 2, wobei ein durch den zweiten digitalen Inhalt bereitgestelltes Bild ein Mehrfachwinkelbild, ein Hervorhebungsbild, ein Kommentarbild oder ein Gebärdensprachenbild ist, das mit einem durch den ersten digitalen Inhalt bereitgestellten Bild assoziiert ist.

4. Verfahren nach einem der Ansprüche 1 bis 3, wobei das Zusatzdienstelement ein Namenelement, ein Beschreibungselement, einen Textidentifizierer und einen Dienstortidentifizierer des Zusatzdienstes enthält.

5. Verfahren nach Anspruch 4, wobei der Dienstortidentifizierer des Zusatzdienstes einen Netzwerkidentifizierer, einen Transportstromidentifizierer und einen Dienstidentifizierer enthält.

6. Verfahren des Empfangs eines digitalen Inhalt-Dienstes, mit
Empfangen von Dienstfindungsinformationen, die Dienstinformationen SI darstellen, die einen Hauptdienst mit einem ersten Inhalt beschreiben, wobei die Dienstfindungsinformationen ein Zusatzdienstelement mit Zusatzdienstinformationen enthalten, die einen Zusatzdienst mit einem zweiten Inhalt identifizieren, wobei der Zusatzdienst gleichzeitig zusammen mit dem Hauptdienst bereitgestellt werden kann,
Analysieren der Dienstfindungsinformationen,
Empfangen des Hauptdienstes beruhend auf den analysierten Dienstfindungsinformationen entsprechend einem Internetprotokoll,
Analysieren des Zusatzdienstelements in den analysierten Dienstfindungsinformationen und Empfangen des Zusatzdienstes mit dem zweiten Inhalt gleichzeitig zusammen mit dem Hauptdienst beruhend auf dem analysierten Zusatzdienstelement.

7. Verfahren nach Anspruch 6, wobei der erste digitale Inhalt und der zweite digitale Inhalt jeweils einen Videostrom enthält.

8. Verfahren nach Anspruch 7, wobei ein durch den zweiten digitalen Inhalt bereitgestelltes Bild ein Mehrfachwinkelbild, ein Hervorhebungsbild, ein Kommentarbild oder ein Gebärdensprachenbild ist, das mit einem durch den ersten digitalen Inhalt bereitgestellten Bild assoziiert ist.

9. Verfahren nach einem der Ansprüche 6 bis 8, wobei das Zusatzdienstelement einen Namenelement, ein Beschreibungselement, einen Textidentifizierer und einen Dienstortidentifizierer des Zusatzdienstes enthält.

10. Verfahren nach Anspruch 9, wobei der Dienstortidentifizierer einen Netzwerkidentifizierer, einen Transportstromidentifizierer und einen Dienstidentifizierer enthält.

11. Vorrichtung zum Empfang eines digitalen Inhalt-Dienstes entsprechend einem Internetprotokoll, mit
einem Dienstfindungsmanager (714) zum Analysieren von Dienstfindungsinformationen, die Dienstinformationen SI sind, die einen Hauptdienst mit einem ersten Inhalt beschreiben, wobei die Dienstfindungsinformationen ein Zusatzdienstelement mit Zusatzdienstinformationen enthalten, die einen Zusatzdienst mit einem zweiten Inhalt identifizieren, wobei der Zusatzdienst gleichzeitig zusammen mit dem Hauptdienst bereitgestellt werden kann,
einem Dienstinformationsdatenspeicher (710) zum Speichern der analysierten Dienstfindungsinformationen mit dem Zusatzdienstelement und
einer Steuereinrichtung (706) zur Erzeugung einer Kanalabbildung mit einer Dienstliste des Hauptdienstes und des Zusatzdienstes und zur Steuerung der Bereitstellung des Hauptdienstes entsprechend den analysierten Dienstfindungsinformationen,
wobei die Steuereinrichtung (706) die Bereitstellung des Zusatzdienstes gleichzeitig mit dem Hauptdienst beruhend auf dem analysierten Zusatzdienstelement steuert, wenn der Dienstfindungsmanager (714) das Zusatzdienstelement analysiert.

12. Vorrichtung nach Anspruch 11, wobei der erste digitale Inhalt und der zweite digitale Inhalt jeweils einen Videostrom enthält.

13. Vorrichtung nach Anspruch 12, wobei ein durch den zweiten digitalen Inhalt bereitgestelltes Bild ein Mehrfachwinkelbild, ein Hervorhebungsbild, ein Kommentarbild oder ein Gebärdensprachenbild ist, das mit einem durch den ersten digitalen Inhalt bereitgestellten Bild assoziiert ist.

14. Vorrichtung nach einem der Ansprüche 11 bis 13, wobei das Zusatzdienstelement einen Netzwerkidentifizierer, einen Transportstromidentifizierer und einen Dienstidentifizierer enthält.

15. Vorrichtung nach einem der Ansprüche 11 bis 14, wobei die Steuereinrichtung (706) ein Steuersignal von einem Benutzer empfängt und Empfang und Ausgabe des Zusatzdienstes steuert.

## Revendications

1. Procédé de transmission d'un service de contenu numérique, le procédé comprenant :
la génération d'informations de découverte de service, qui sont des informations de service, SI, décrivant un service principal comprenant un premier contenu numérique,
les informations de découverte de service contenant un élément de service supplémentaire comprenant des informations de service supplémentaire qui identifient un service supplémentaire comprenant un second contenu numérique,
**caractérisé en ce que** le service supplémentaire est capable d'être fourni simultanément, conjointement avec le service principal ; et
la transmission des informations de découverte de service conformément à un protocole Internet, et la fourniture, lorsque l'élément de service supplémentaire est analysé, du service supplémentaire simultanément, conjointement avec le service principal à un utilisateur en fonction de l'élément de service supplémentaire analysé.

2. Procédé selon la revendication 1, dans lequel chacun parmi le premier contenu numérique et le second contenu numérique comprend un flux vidéo.

3. Procédé selon la revendication 2, dans lequel une image fournie par le second contenu numérique est une parmi une image à angle multiple, une image de mise en évidence, une image de commentaire et une image de langage des signes associée à une image fournie par le premier contenu numérique.

4. Procédé selon une quelconque des revendications 1 à 3, dans lequel l'élément de service supplémentaire comprend un élément de nom, un élément de description, un identifiant textuel et un identifiant de localisation de service du service supplémentaire.

5. Procédé selon la revendication 4, dans lequel l'identifiant de localisation de service du service supplémentaire comprend un identifiant de réseau, un identifiant de flux de transport et un identifiant de service.

6. Procédé de réception d'un service de contenu numérique, le procédé comprenant :
la réception d'informations de découverte de service, qui sont des informations de service, SI, décrivant un service principal comprenant un premier contenu, les informations de découverte de service contenant un élément de service supplémentaire comprenant des informations de service supplémentaire qui identifient un service supplémentaire comprenant un second contenu, dans lequel le service supplémentaire est capable d'être fourni simultanément, conjointement avec le service principal ;
l'analyse syntaxique des informations de découverte de service ;
la réception, conformément à un protocole Internet, du service principal en fonction des informations de découverte de service analysées ;
l'analyse syntaxique de l'élément de service supplémentaire dans les informations de découverte de service analysées et la réception du service supplémentaire comprenant le second contenu simultanément, conjointement avec le service principal en fonction de l'élément de service supplémentaire analysé.

7. Procédé selon la revendication 6, dans lequel chacun parmi le premier contenu numérique et le second contenu numérique comprend un flux vidéo.

8. Procédé selon la revendication 7, dans lequel une image fournie par le second contenu numérique est une parmi une image à angle multiple, une image de mise en évidence, une image de commentaire et une image de langage des signes associée à une image fournie par le premier contenu numérique.

9. Procédé selon une quelconque des revendications 6 à 8, dans lequel l'élément de service supplémentaire comprend un élément de nom, un élément de description, un identifiant textuel et un identifiant de localisation de service du service supplémentaire.

10. Procédé selon la revendication 9, dans lequel l'identifiant de localisation de service comprend un identifiant de réseau, un identifiant de flux de transport et un identifiant de service.

11. Appareil pour recevoir un service de contenu numérique conformément à un protocole Internet, l'appareil comprenant :
un gestionnaire de découverte de service (714) configuré pour réaliser l'analyse syntaxique d'informations de découverte de service, qui sont des informations de service, SI, décrivant un service principal comprenant un premier contenu, les informations de découverte de service contenant un élément de service supplémentaire comprenant des informations de service supplémentaire qui identifient un service supplémentaire comprenant un second contenu, dans lequel le service supplémentaire est capable d'être fourni simultanément, conjointement avec le service principal ;
un stockage de données d'informations de service (710) configuré pour stocker les informations de découverte de service analysées contenant l'élément de service supplémentaire ; et
un organe de commande (706) configuré pour générer une carte de canaux possédant une liste de services du service principal et du service supplémentaire et pour commander le service principal destiné à être fourni selon les informations de découverte de service analysées,
dans lequel, lorsque le gestionnaire de découverte de service (714) réalise l'analyse syntaxique de l'élément de service supplémentaire, l'organe de commande (706) commande le service supplémentaire destiné à être fourni simultanément au service principal en fonction de l'élément de service supplémentaire analysé.

12. Appareil selon la revendication 11, dans lequel chacun parmi le premier contenu numérique et le second contenu numérique comprend un flux vidéo.

13. Appareil selon la revendication 12, dans lequel une image fournie par le second contenu numérique est une parmi une image à angle multiple, une image de mise en évidence, une image de commentaire et une image de langage des signes associée à une image fournie par le premier contenu numérique.

14. Appareil selon une quelconque des revendications 11 à 13, dans lequel l'élément de service supplémentaire comprend un identifiant de réseau, un identifiant de flux de transport et un identifiant de service.

15. Appareil selon une quelconque des revendications 11 à 14, dans lequel l'organe de commande (706) reçoit un signal de commande à partir d'un utilisateur, et commande le service supplémentaire destiné à être reçu et envoyé.
